# EUROPÄISCHE PATENTANMELDUNG

(11) **EP 2 626 332 A1**
(43) Veröffentlichungstag der Anmeldung: **14.08.2013**
(21) Anmeldenummer: 12000900.6
(22) Anmeldetag: 11.02.2012
(51) Int. Cl.: C02F 3/20

(54) **Belüftung von Schlamm mit Düsen mit spezifischem Innendurchmesser**

(71) Anmelder: Weikopf, Manfred, 47802 Krefeld (DE)
(72) Erfinder: Weikopf, Manfred, 47802 Krefeld (DE)

(57) **Zusammenfassung**

Um die die technisch bedingten Gesamtkosten für den Bau, Betrieb, Wartung und Gesamtenergieverbrauch von Belebungsanlagen [10] wesentlich zu reduzieren, wird ein neuartiges Verfahren zur Beschickung von Düsenträger-Systemen [10] für GAS- bzw. FLUID-Medien in den Belebungsanlagen [10] erfindungsgemäß vorgeschlagen. Die Kemidee zielt darauf ab, dass die bisherigen Druckverluste z,B. beim Gasaustritt in den Membranschlitzen der Membranbelüfter und des kompakten Materials von Keramikbelüftern dauerhaft entfallen können. Dies geschieht dadurch, dass Düsenträger-GAS [10] oberseitig mit einer Vielzahl von DE-GAS [10] mit einem DE-Innendurchmesser ≤ 0,4 [10] mm rasterartig luftdicht bestückt werden, die keinerlei Verschlussfunktion besitzen. Zur energieeffizienten Durchmischung der Belebungsanlagen [10] werden erfindungsgemäß die DT-FLUID [10] in verminderter Anzahl mit DE-FLUID [10] jedoch mit DE-Innendurchmesser [10] im Regelfall zwischen ≥ 1,00 und 4,00 mm bestückt. Vorteilhaft ist, dass die mit DE-Elementen bestückten DT-GAS bzw. DT-FLUID verfahrensbedingt mit biologisch abbaubaren Reagenzien einzeln zwangs- bzw. rückgespült werden können, ohne durch Entleerung des Belebungsbeckens den Betriebsprozess zu unterbrechen.

## Beschreibung

Die Erfindung beinhaltet ein Verfahren zur gesteuerten Beschickung von Düsenträger-FLUID-Elementen bzw. Düsenträger-GAS-Elementen, in die oberseitig eine Vielzahl von verfahrensbdingten Düsenelementen-FLUID bzw. Düsenelementen-GAS luftdicht eingesetzt werden, um je nach Verfahrensschritt flüssige oder gasförmige Medien zur Aktivierung und Betriebsoptimierung von Klär- und Reinigungsprozessen von kommunalen und gewerblichindustriellen Abwässern und Abwässern aus der Klärschlamm- und Rückstandsbehandlung, sowie aus Deponien in mechanisch-biologischen bzw. "batch" betriebenen Belebungsanlagen, sowie zur Verbesserung der Gewässergüte in fließenden und stehenden natürlichen und künstlichen Gewässern, sowie ein Verfahren zur Fertigung eines Düsenträger-FLUID-Elementes bzw. Düsenträger-GAS-Elementes, umzusetzen. Ein wesentlicher Schritt beim biologischen Abbau von Abwasserinhaltsstoffen in den Kläranlagen wird dadurch erreicht, dass im Belebungsverfahren eine Sauerstoffanreicherung mittels unterschiedlichster Methoden wie z.B. grob- oder feinblasige Druckluftbelüftung, sowie Membran- und Keramikbelüfter usw. umgesetzt wird. Um den Eintrag von Sauerstoff zum aeroben Abbau mittels geeigneter Mikroorganismen, wie Bakterien, fadenartige Algen usw., sowie der Umwälzprozesse in den Kläranlagen zu ermöglichen, ist derzeit dauerhaft ein sehr hoher Energieaufwand für die Bereitstellung von elektrischem Strom zum Betrieb von Belüftungsanlagen notwendig. Wegen der steigenden Energiekosten und der politischen Vorgaben zur Reduktion des Ausstoßes klimaschädlicher Gase ist es nunmehr sinnvoll, Verfahren zu entwickeln, die es ermöglichen den Energieverbrauch von Kläranlagen und hierbei insbesondere von Belebungsanlagen dauerhaft zu minimieren und weiterhin auch alle notwendigen Schritte zu verfolgen die Bau-, Wartungs- und Betriebskosten der Gesamtanlagen zu reduzieren.

**Aufgabe der vorliegenden Erfindung ist es,** die technisch bedingten Gesamtkosten für den Bau, den Betrieb, die Wartung und den Gesamtenergieverbrauch von Belebungsanlagen wesentlich zu reduzieren, dass in der Kernidee erfindungsgemäß durch ein neuartiges Verfahren mit den Merkmalen des **Anspruchs 1** zur Beschickung von Düsenträger-Systeme für FLUID und GAS- Medien in den Belebungsanlagen und deren technische Umsetzung rückschlüssig umgesetzt werden kann.

Die Reduzierung des Energieverbrauches wird bei dem **DT-GAS** (DüsenTräger-GAS) im Wesentlichen dadurch erreicht, dass im Gegensatz zu den derzeit üblichen Membranbelüftern die systembedingten Druckverluste beim Gasdurchtritt aus den Membranschlitzen dauerhaft entfällt, weil das **DE-GAS** (DüsenElement-GAS) keinerlei Verschlussfunktion besitzt. Dieser Effekt ist auch beim **DE-FLUID** (DüsenElement-FLUID) nachvollziehbar. Die Größenordnung der austretenden Gasblasen aus dem **DE-GAS** ist insbesondere bei dem biologischen Abbauprozess der Schmutzstoffe für den Energieverbrauch von ausschlaggebender Bedeutung. Da größere Blasen mit einer entsprechend höheren Aufstiegsgeschwindigkeit aufsteigen, wird durch eine verkürzte Kontaktzeit der Gasblase eine verminderte Sauerstoffübertragung im Belebungsbecken erreicht, die noch dadurch verstärkt werden kann, wenn eine mögliche Koalierung einzelner aufsteigender Gasblasen zu stetig größeren Gasblasen entlang der Auftriebsstrecke stattfindet. Dieser Nachteil wird insbesondere bei dem DE-GAS unterbunden, weil im Regelfall der DE-Innendurchmesser ≤ 0,4 mm beträgt und durch den erfindungsgemäßen DE-Spitzenwinkel α ≥ 0 bzw. optimal 60° zur Horizontalen auf Grund eigener Versuche eine seitliche Verschiebung der austretenden Blase auftritt, die ein weitere Koalierung verhindert. Ein wesentlicher Nachteil der derzeitig verwendeten Belüfter ist darin zu sehen, dass verflüssigter Schlamm- sowie Fett oder auch Kalkanteile usw. aus dem Belebtschlamm in die Membranbelüfter bzw. Rohrbelüfter eindringen und Schlitze in den Membranen oder auch die gesamte Oberfläche zusetzen können. Die eingetragene Luft führt zur Verdunstung des eingetretenen Abwassers, hier durch werden jedoch die Festanteile aus dem Innenraum der rohr- oder tellerförmigen Belüfterträger nicht entfernt. Diese Problematik kann bei einer Versetzung der DE-Systeme, wenn sie mit ihrem DE-Sockel auf dem DT-U-Wannenboden aufsitzen nicht eintreten, da hierdurch eine Zwangsentleerung des Innenraumes im DT-Systeme nicht nur über die DE-Systeme sondern zusätzlich auch über die Anordnung eines auslaufseitigen DT-Überdruckventils umgesetzt wird, da die Einströmung von Gas oder Fluid hierbei immer hochverwirbelt über den DE-Einlauf in die DE-Systeme geleitet wird. Sollten Verkrustungen aus Belebtschlamm oder Fetten usw. z.B. in einem DT-FLUID auftreten, so kann ein solches DT-System durch Einmischung einer entsprechenden biologisch abbaubaren Reagenz im FLUID, wie vielfach auf Kläranlagen verwendete Essigsäure, über die Ankoppelung eines "fliegenden" Spülschlauchs am Zulaufsystem eine wartungsminimale Reinigung im jeweiligen DT-System bewirken. Eine weitere Alternative zur Umwälzung und optimalen Aufmischung des Volumens im Belebungsbecken ist die Möglichkeit, beim zeitgetaktete Denitrifikationsprozess, dem DT-FLUID über eine schiebergesteuerte Kurzschlussleitung zwischen dem MA-GAS und MA-FLUID den DT-FLUID unter höherem Druck mit einem Gasmedium zu beschicken. Bei dieser Option bewirken die zwangsweise entstehenden, wesentlich größeren pilzkopfartigen Blasen, eine vertikale, rasterflächig geartete Durchmischung mit weniger Energieaufwand, als dies mit den derzeit genutzten Umwälzpumpen ermöglicht wird..

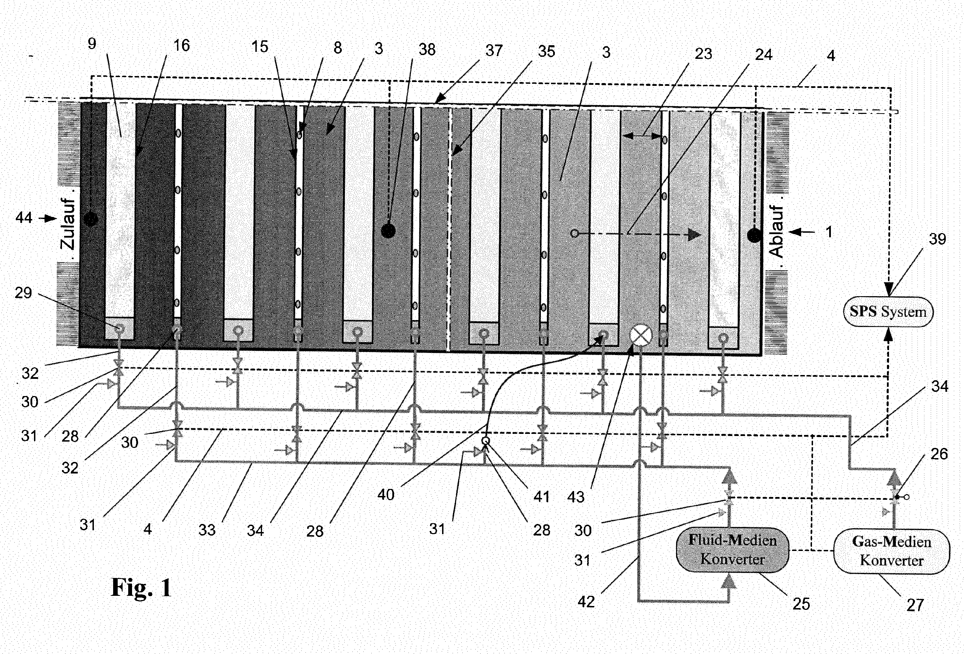

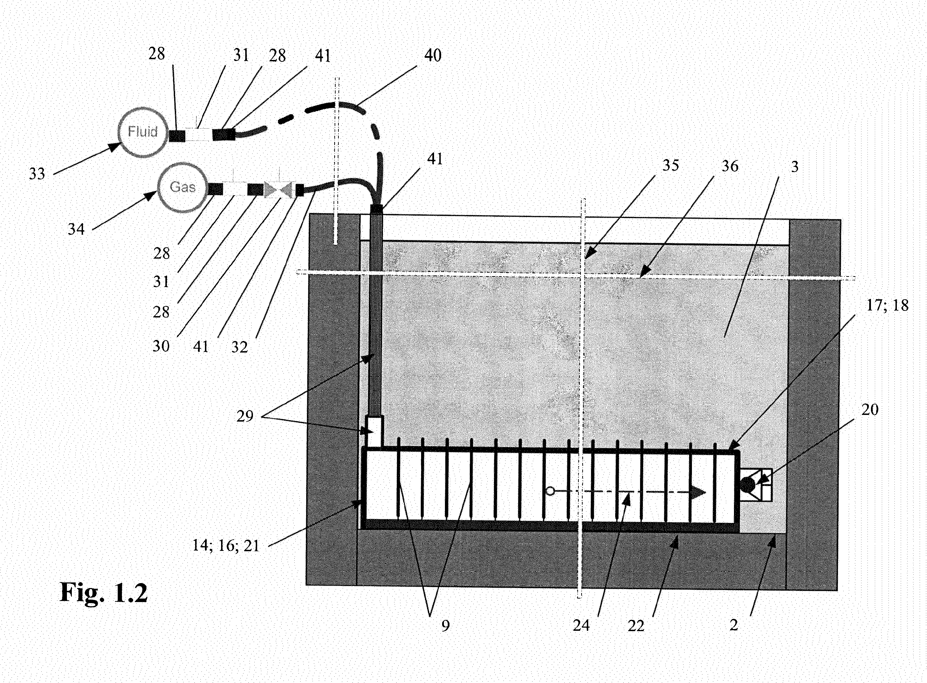

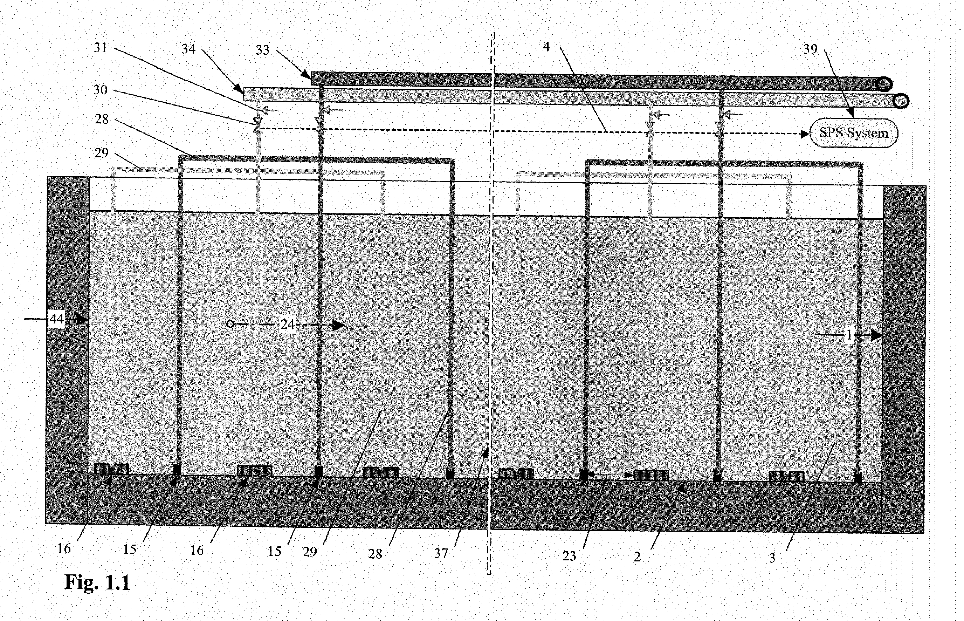

Es zeigt in **Fig.1** einen verfahrensbedingten Lageplan eines Belebungsbeckens [3] auf dessen Beckenboden [2] beispielhaft unterschiedlich dargestellte DT-Systeme [14] nämlich DT-FLUID [8] und DT-GAS [9] verlegt sind, die für verfahrensgemäß differenzierte Aufgaben im Belebungsverfahren notwendig sind. Die Bereitstellung der notwendigen Gasmedien zur Beschickung der DT-GAS [16] erfolgt im GM-Konverter [27], in dem verfahrensbedingt auch im Bedarfsfall eine Aufkonzentrierung des Luftmediums z.B. durch reinen Sauerstoff oder zur Elimination von Spurenstoffen z. B. durch Ozon, erfolgen kann. Aus dem Lageplan wird ersichtlich, dass die Beschickung der einzelnen DT-GAS [16] ausgehend vom Gas-Medien Konverter [27] der Reihe nach über folgende Systemteile: Medien-Beckenverteiler-Gas [34], handbetätigter Medienabzweig-Schieber [31], gesteuerter GM-Druckminderer [26], Medien-Beckenverteiler-GAS [34], handbetätigter Medienabzweig-Schieber [31], gesteuerter Medienabzweig-Schieber [30], Medienabzweig-Schlauch [32], Medienabzweiger-GAS [29] zum DT-GAS [16], erfolgt.

Aus dem Lageplan wird weiterhin ersichtlich, dass die Beschickung der einzelnen DT-FLUID [15] ausgehend vom Fluid-Medien Konverter [25] der Reihe nach über folgende Systemteile: Medien-Beckenverteiler-Fluid [33], handbetätigter Medienabzweig-Schieber [31], gesteuerter Medienabzweig-Schieber [30], Medien-Beckenverteiler-Fluid [33], handbetätigter Medienabzweig-Schieber [31], gesteuerter Medienabzweig-Schieber [30], Medienabzweig-Schlauch [32], Medienabzweiger-Fluid [28] zum DT-FLUID [15] erfolgt. Weiterhin ist zu erkennen, dass die in den jeweiligen Medienabzweiger-GAS [29] bzw. Medienabzweiger-FLUID [28] installierten gesteuerten Medienabzweigschieber [30] mittels eines Bus-Systems [4] mit einem SPS-System [39] verbunden sind und die vorgelagerten, handbetätigten Medienabzweigschieber [31] zur besseren Wartung genutzt werden. Da nicht auszuschließen ist, dass sich beim Betrieb der DT-Systeme [14] Belebtschlammflocken, Fette usw. in den DT-GAS [16] bzw. DT-FLUID [15] ablagern können, ist verfahrensgemäß eine Rückspülung der DT-Systeme [14] mit dem Abwasser des Belebungsbeckens [3] vorgesehen. Im Einzelnen kann die Umsetzung wie folgt erfolgen:

Die im Belebungsbecken [3] installierte Umwälzpumpe [43] fördert kurzzeitig mit erhöhtem Druck Abwasser aus dem Belebungsbecken [3] über die Umwälzleitung [42] zum FM-Konverter [25], in dem gegebenenfalls eine Zumischung von Essigsäure zum Fettabbau in de jeweiligen DT-System [14] beigemischt wird. Der gebogene Spülschlauch [40] zum FM-Konverter [25] in **Fig. 1** ist hier beispielhaft an einem separaten MA-FLUID [28] über eine Spülschlauch-Kupplung [41] angeschlossen, damit ein einzelnes hier DT-GAS [16] rückgespült werden kann. Eine weitere Alternative, hier nicht gesondert dargestellt, könnte auch durch eine Ankoppelung des Spülschlauches [40] direkt m FM-Konverter [25] erfolgen.

Die Beschickung des Belebungsbeckens [3] mit Gasmedien zum biologischen Abbau von Abwasserinhaltsstoffen bzw. von Fluidmedien zur Volumenumwälzung des Belebungsbeckens [3] wird in Fig. 1 dadurch ersichtlich, dass Sondensysteme [38] zur qualitativen online Messung, gegebenenfalls auch schichtweisen Messung gemäß EP 2000604 (z.B. Sauerstoff, Nitrat, .......) vorgesehen sind, damit über das SPS-System [39] und das BUS-System [4] die Ansteuerung der einzelnen MA-Schieber [30], GM-Druckminderer [26] usw. die DT-Systeme [14] optimal gesteuert werden können, damit z.B. die Sauerstoffkonzentration, sowie sonst relevante Abwasserwerte am Ablauf [1] des Belebungsbeckens [3] die genehmigten Ablaufwerte erreicht.
**Fig. 1.1** zeigt einen funktionalen Längsschnitt durch ein Belebungsbecken [3], aus dem ersichtlich wird, wie die jeweilige Beschickungsanordnung der DT-GAS [16] bzw. den DT-FLUID [15], die auf dem Beckenboden [2] mit einem DT-Verbundabstand [23] angeordnet sind, nicht nur einzeln, sondern auch hier verdeutlicht im dreier Verbund vom Zulauf [44] in Fließrichtung [24] zum Ablauf [1] beschickt werden können, damit gegebenenfalls die Anzahl benötigter MA-Schieber [30,31] aus Kostengründen reduzierbar sind.
**Fig. 1****.****2** veranschaulicht in einer unmaßstäblichen Querschnittskizze die verfahrensgemäße Vorgehensweise für eine gegebenenfalls notwendige Rückspülung eines DT-GAS [16] mit einem Fluid, dass beispielhaft aus dem Medien-Beckenverteiler-FLUID [33] über hintereinander angeordnete diverse Anlagensysteme wie folgt:
   MA-FLUID [28] handbetätigter MA-Schieber [31], MA-FLUID [28], Spülschlauchkupplung [41], und "fliegenden" Spülschlauch [40], der am MA-FLUID [28] mittels Spülschlauchkupplung [41] an den MA-GAS [29] gekoppelt ist und damit die Rückspülung des DT-GAS [16] kurzzeitig unter erhöhter, gesteuerter Druckbeaufschlagung des Fluidmediums erfolgt. Ersichtlich und nachvollziehbar ist auch, dass durch die Vielzahl der DE-GAS [9] innerhalb des DT-GAS [16] eine große Verwirbelung des Fluidmediums eintritt, und damit eine zusätzliche großvolumige, schmutzfrachtbehaftete Entleerung über das DT-Überdruckventil [20] in Fließrichtung [24], erfolgen kann.

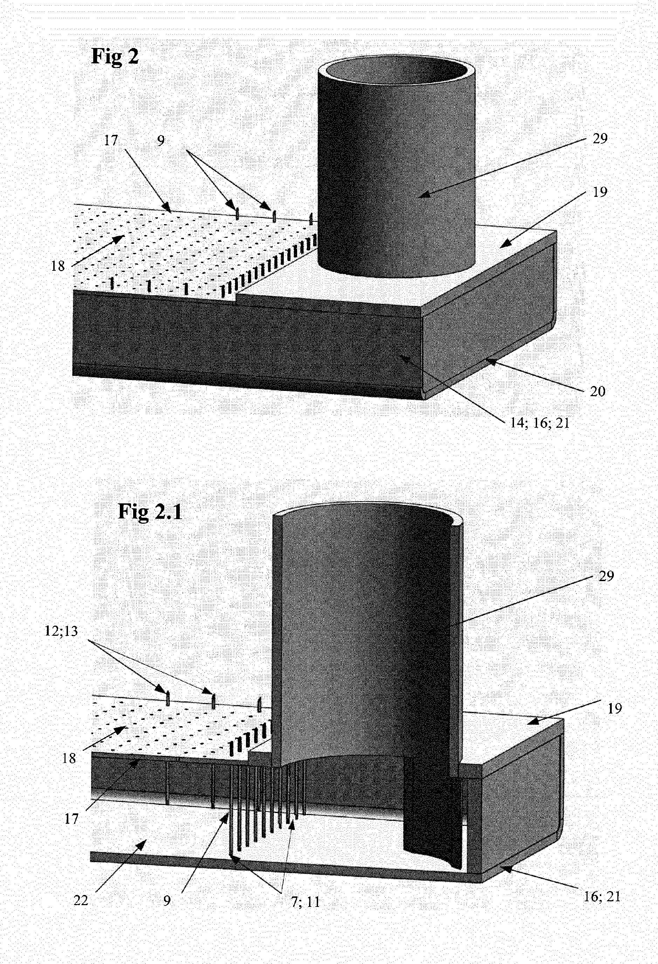

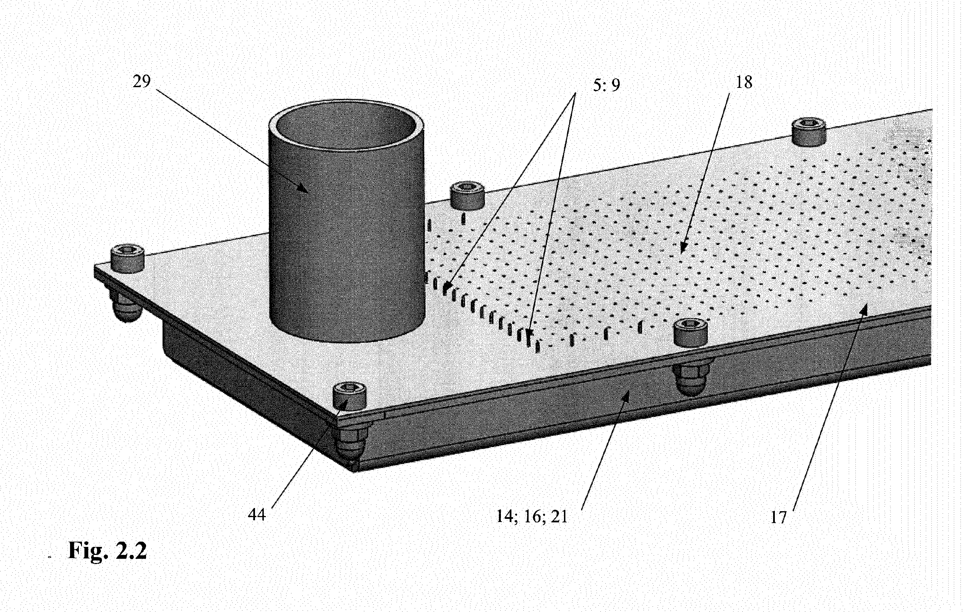

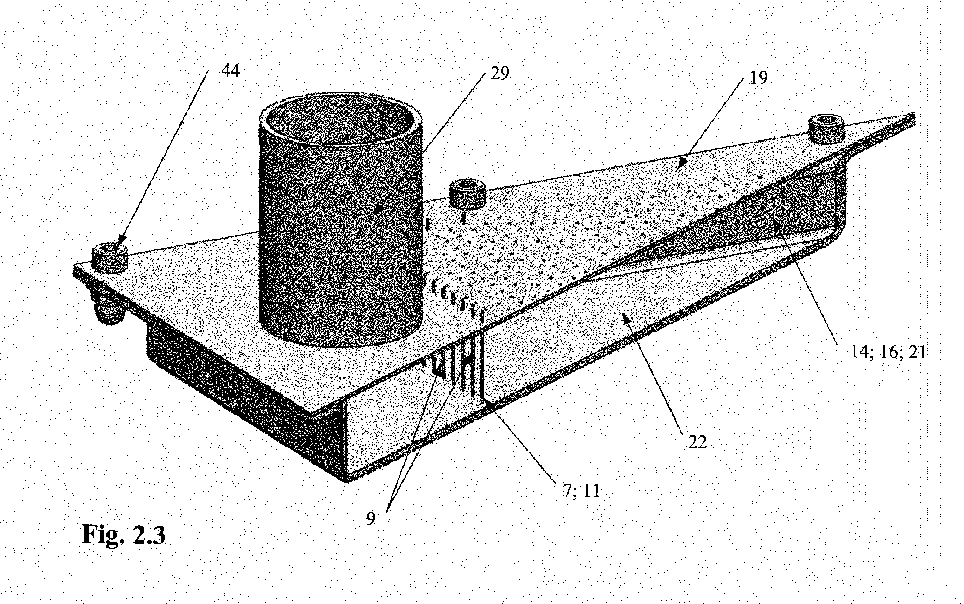

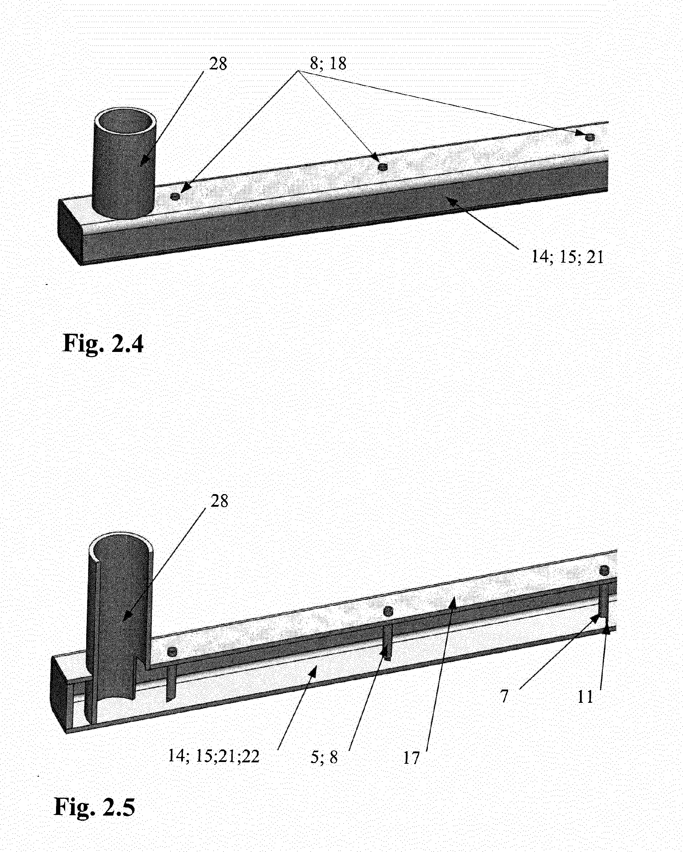

**Fig. 2** veranschaulicht mittels einer 3D Zeichnung den Anschlussbereich des MA-GAS [29] an ein DT-GAS [16] mit seinem auf der DT-Wanne [21] verlegten, in diesem Falle seitlich verschweißten DT-Lochblech [17], in dem aus Gründen der vereinfachten Darstellung nur eine beispielhafte Anzahl von DE-GAS [9] dargestellt werden, die luftdicht in das hexagonale DT-Lochraster [18] im DT-Lochblech [17] versetzt sind.
**Fig. 2****.****1** zeigt einen Schnitt durch das DT-GAS [16] gemäß Fig. 2, wobei ersichtlich wird, dass die DE-GAS [9] auf dem DT-U-Wannnenboden [22] mit dem DE-Sockel [11] aufsetzen, damit das zur Beschickung anstehende Gasmedium bzw. zu Spülzwecken benötigte Fluidmedium zwangsweise verwirbelt in den DE-Einlauf [7] eintritt und an der DE-Spitze [12], die mit einem DE-Spitzenwinkel α [13] ≥ 0 bzw. optimal 60° zur Horizontalen versehen ist, austritt.
**Fig. 2.2** zeigt eine Ansicht des erfindungsgemäßen DT-Systems [14] als DT-GAS [16], dass hier mit einigen DE-GAS [9] gemäß DT-Lochraster [18] bestückt ist, wobei das DT-Lochblech [17] und die DT-U-Wanne [21] seitlich mittels Verschraubungen [44] untereinander luftdicht verschraubt sind.
**Fig. 2****.****3** zeigt einen Schnitt durch das DT-GAS [16] gemäß Fig. 2.2, wobei ersichtlich wird, dass die DE-GAS [9] auf dem DT-U-Wannnenboden [22] mit dem DE-Sockel [11] aufsetzen. Weiterhin erkennt man den MA-GAS [29] der luftdicht mit dem DT-Lochblech [17] verschweißt ist und die zugehörigen Verschraubungen [44] zwischen dem DT-Lochblech [17] und der DT-U-Wanne [21].
**Fig. 2.4** zeigt eine Ansicht des erfindungsgemäßen DT-Systems [14] als DT-FLUID [15], dass hier mit einigen DE-FLUID [8] gemäß DT-Lochraster [18] bestückt ist, wobei das DT-Lochblech [17] und die DT-U-Wanne [21] seitlich verschweißt sind.
**Fig. 2.5** zeigt einen Schnitt durch das DT-FLUID [15] gemäß **Fig. 2.4**, wobei ersichtlich wird, dass die DE-FLUID [8] auf dem DT-U-Wannnenboden [22] mit dem DE-Sockel [11] aufsetzen.

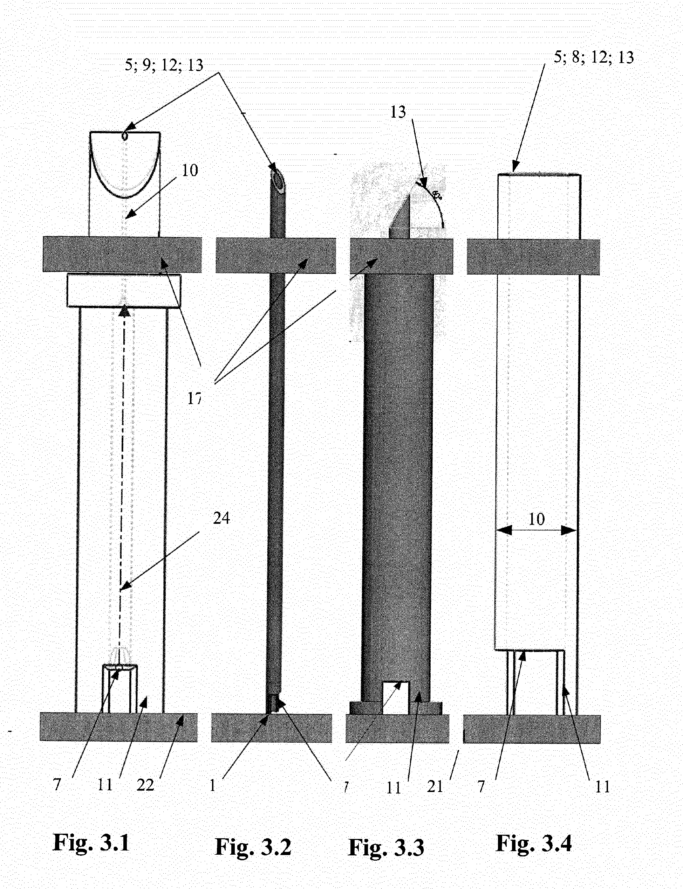

**Fig. 3.1** zeigt eine Ansicht mit gestrichelten Schnittlinien des erfindungsgemäßen DE-Systems [5] als Spritzgussteil, wobei die DE-Spitze [12] mit seinem DE-Spitzenwinkel α [13] von ≥ 0 bzw. optimal 60° zur Horizontalen und dem mittig angeordneten DE-Innendurchmesser [10] erkennbar ist. Weiterhin wird ersichtlich, dass das DE-GAS [16] mit seinem DE-Sockel [11] auf dem DT-U-Wannnenboden [22] aufsitzt und der DE-Einlauf [7] verbindungstechnisch bis zur DE-Spitze [12] in Fließrichtung [24] über den DE-Innendurchmesser [10] der beschickbaren unterschiedlichen Medien GAS bzw. FLIUD gestrichelt verbunden ist. Das eingezeichnete DT-Lochblech [17] und der DT-U-Wannenboden [22] verdeutlichen, dass die notwendige luftdichte Verbindung im DT-Lochraster [18] mit dem jeweiligen DE-System [5] gewährleistet sein muss.
**Fig. 3.2** zeigt eine Ansicht des erfindungsgemäßen DE-Systems [5] hier DE-GAS [9] in kompletter Edelstahlausführung mit den ähnlichen Merkmalen wie **Fig. 3.1**.
**Fig. 3.3** zeigt eine Ansicht des erfindungsgemäßen DE-Systems [5] hier DE-GAS [9] in einer kombinierten Edelstahlausführung der DE-Spitze [12] unter einem DE-Spitzenwinkel α [13] von ≥ 0 bzw. optimal 60° zur Horizontalen und einem Spritzgussteil im Bereich zwischen DT-Lochblech [17] und der DT-U-Wannenboden [22], ansonsten mit den ähnlichen Merkmalen wie **Fig. 3.1**.
**Fig. 3.4** zeigt eine Ansicht des DE-Systems [5] hier DE-FLUID [8] in einer kompletten Edelstahlausführung mit einem erfindungsgemäß größeren DE-Innendurchmesser [10] bei dem die DE-Spitze [12] unter einem DE-Spitzenwinkel α [13] = 0° zur Horizontalen ausgebildet ist. Ansonsten gelten auch hier die ähnlichen Merkmale wie in **Fig. 3.1**.

### Aufstellung der Bezugszeichen

| | | |
|---|---|---|
| [1] | Ablauf | (Belebungsbecken) |
| [2] | Beckenboden | (Belebungsbecken) |
| [3] | Belebungsbecken | |
| [4] | Bus-System | |
| | | |
| [5] | DE-System | |
| [6] | DE-Außendurchmesser | (DüsenElement-Außendurchmesser) |
| [7] | DE-Einlauf | (DüsenElement-Einlauf) |
| [8] | DE-FLUID | (DüsenElement-FLUID) |
| [9] | DE-GAS | (DüsenElement-GAS) |
| [10] | DE-Innendurchmesser | (DüsenElement-Innendurchmesser) |
| [11] | DE-Sockel | (DüsenElement-Sockel) |
| [12] | DE-Spitze | (DüsenElement-Spitze) |
| [13] | DE-Spitzenwinkel α | (DüsenElement-Spitzenwinkel α) |
| | | |
| [14] | DT-System | (DüsenTräger allgemein) |
| [15] | DT-FLUID | (DüsenTräger-FLUID) |
| [16] | DT-GAS | (DüsenTräger-GAS) |
| [17] | DT-Lochblech | |
| [18] | DT-Lochraster | |
| [19] | DT-Sockelblech | |
| [20] | DT-Überdruckventil | |
| [21] | DT-U-Wanne | |
| [22] | DT-U-Wannenboden | |
| [23] | DT-Verbundabstand | |
| | | |
| [24] | Fließrichtung | (Belebungsbecken) |
| [25] | FM-Konverter | (FLUID-Medien Konverter) |
| [26] | GM-Druckminderer | |
| [27] | GM-Konverter | (GAS-Medien Konverter) |
| | | |
| [28] | MA-FLUID | (MedienAbzweiger) |
| [29] | MA-GAS | |
| [30] | MA-Schieber | (gesteuert) |
| [31] | MA-Schieber | (handbetätigt) |
| [32] | MA-Schlauch | |
| | | |
| [33] | Medien-Beckenverteiler-FLUID | |
| [34] | Medien-Beckenverteiler-GAS | |
| | | |
| [35] | Schnittlinie | (Breite / 2 des Belebungsbeckens) |
| [36] | Schnittlinie | (Höhe des Belebungsbeckens) |
| [37] | Schnittlinie | (Länge des Belebungsbeckens) |
| | | |
| [38] | Sondensystem | |
| [39] | SPS-System | |
| [40] | Spülschlauch | |
| [41] | Spülschlauch-Kupplung | |
| [42] | Umwälzleitung | |
| [43] | Umwälzpumpe | (Belebungsbecken) |
| [44] | Verschraubung | (DT-Lochblech bzw. DT-U-Wanne) |
| [45] | Zulauf | (Belebungsbecken) |

## Patentansprüche

1. **Verfahren zur gesteuerten Beschickung** von generellen DT-Systemen [14], insbesondere DT-GAS [16] bzw. DT-FLUID [15], die mit einem oberseitigen DT-Lochblech [17], in die verfahrensbedingt eine entsprechende Anzahl von generellen DE-Systemen [5] insbesondere DE-GAS [9] bzw. DE-FLUID [8] versetzt sind, um je nach Verfahrensschritt gasförmige oder flüssige Medien zur Aktivierung und Betriebsoptimierung von Abwasserklärprozessen in mechanisch-biologischen bzw. "batch" betriebenen Belebungsbecken [3], sowie Verfahren zur prozessabhängigen Fertigung von unterschiedlich ausgebildeten DT-Systemen [14] und zugehörigen DE-Systemen [5] umzusetzen, **dadurch gekennzeichnet,**
**dass** die DE-Innendurchmesser [10] ≤ 0,4 mm bei den **DE-Gas** [9] betragen, um möglichst schon bei geringsten Gasdrücken minimalvolumige Gasblasen zu erzeugen und weiterhin die **DE**-Innendurchmesser [10] im Regelfall zwischen ≥ 1,00 und 4,00 mm bei den **DE**-Fluid [8] zur besseren Aufmischung und Volumenumwälzung der Belebungsbecken [3] ausgebildet werden, wobei die **DE**-Spitze [12] der **DE**-GAS [9] zur feineren Gasblasenbildung einen **DE**-Spitzenwinkel α [13] von ≥ 0 bzw. optimal 60° zur Horizontalen besitzen und die **DT**-FLUID [15] zur Bedüsungsoptimierung mit einem **DE-**Spitzenwinkel α [13] = 0° ausgestattet ist und weiterhin zur Zwangsentwässerung durch eventuell eintretendes Abwasser aus dem Belebungsbecken [3] eine Zwangsentleerung der **DT**-Systeme [14; 15; 16] dadurch ermöglicht wird, dass der **DE**-Sockel [11] mit seinem anschließenden **DE**-Einlauf [7] auf dem jeweiligen **DT**-U-Wannenboden [22] aufsitzt.

2. **Verfahren nach Anspruch 1, dadurch gekennzeichnet, dass** der **DT**-GAS bzw. **DT-**FLUID verfahrensbedingt fertigungstechnisch ein- bzw. zweiteilig gefertigt, und bei einer zweiteiligen Ausbildung das oberliegende **DT**-Lochblech [17] mit der unterliegenden **DT**-U-Wanne [21] luftdicht, seitlich verschraubt werden muss, wenn das **DE**-System [5; 8; 9] teilweise nicht aus Edelstahl gefertigt ist, im Gegensatz zu einer einteiligen Ausbildung des **DT** Systems [14] wobei die **DE**-FLUID [15] bzw. DE-GAS [16] gemäß vorgegebenem **DT**-Lochraster [18] des **DT**-Lochbleches [19] komplett mit aus Edelstahl gefertigten **DE**-Systemen [5] bestückt werden muss, damit das **DT**-Lochblech [17] mit der **DT**-U-Wanne [21] miteinander verschweißt werden kann.

3. **Verfahren nach Anspruch 1 und 2, dadurch gekennzeichnet, dass** die jeweiligen **DT-**Systeme [14; 15; 16] verfahrensgemäß mittels eines "fliegenden" Spülschlauches [40], der mit beidseitig versehenen Spülschlauchkupplungen [41] versehen ist, zwangsweise rückspülbar sind und in die **DT**-Systeme [14] im Endbereich der Fließrichtung [24] ein großvolumiges **DT**-Überdruckventil [20] integriert ist, um kurzfristig bei entsprechendem Überdruck sich öffnend eine schmutzfrachtbehaftete Entleerung zu ermöglichen.

4. **Verfahren nach Anspruch 1 bis 3 dadurch gekennzeichnet, dass** durch eine im Belebungsbecken [3] installierte Umwälzpumpe [43] das gepumpte Abwasser dezentral bzw. im FM-Konverter [25] mit einem biologisch abbaubaren Lösungsmittel versetzt wird, um die jeweiligen **DT**-Systeme [14; 15; 16] und insbesondere **DE**-Systeme [5; 8; 9] über die Ankoppelung eines Spülschlauches [40] gegebenenfalls einzeln zu reinigen bzw. zurück zu spülen.

5. **Verfahren nach Anspruch 1 bis 4 dadurch gekennzeichnet, dass** zur Umwälzung und optimalen Aufmischung des Volumens im Belebungsbecken [3] die Möglichkeit, beim zeitgetaktete Denitrifikationsprozess erfindungsgemäß besteht, dem **DT**-FLUID [15] über eine schiebergesteuerte Kurzschlussleitung zwischen dem MA-GAS [29] und MA-FLUID [28] den **DT**-FLUID [15] unter Beaufschlagung mit einem Gasmedium unter höherem Druck zu beschicken, sodass bei dieser Option sich zwangsweise wesentlich größere, pilzkopfartige Blasen erzeugen lassen, die eine vertikale, rasterflächig geartete Durchmischung des gesamten Belebungsbeckens [3] mit weniger Energieaufwand zu bewirken.
